# FASCICULE DE BREVET EUROPEEN

(11) **EP 2 156 990 B1**
(45) Date de publication et mention de la délivrance du brevet: **04.05.2011**
(21) Numéro de dépôt: 09305729.7
(22) Date de dépôt: 03.08.2009
(51) Int. Cl.: B60R 19/34

(54) **Dispositif de pare-chocs pour véhicule automobile et véhicule automobile comprenant un tel dispositif**
Stossfängersystem für Fahrzeuge und Fahrzeug mit einem solchen Stossfängersystem
Bumper system for vehicles and a vehicle with such a bumper system

(30) Priorité: 11.08.2008 FR 0855514
(43) Date de publication de la demande: 24.02.2010
(73) Titulaire: Faurecia Bloc Avant, 92000 Nanterre (FR)
(72) Inventeur: Gonin, Vincent, 25600 Sochaux (FR)
(74) Mandataire: Jacobson, Claude

(56) Documents cités:
- EP-A- 1 942 033
- WO-A-02/36392
- DE-A1- 19 526 707
- DE-A1- 19 603 954
- DE-A1-102005 003 598
- DE-C1- 19 611 934

## Description

La présente invention concerne un dispositif de pare-chocs pour véhicule automobile, du type comprenant au moins un élément transversal prévu pour s'étendre transversalement entre les extrémités de deux longerons de véhicule automobile, et deux supports pour fixer le ou chaque élément transversal sur les longerons, chaque support comprenant une face frontale de réception du ou de chaque élément transversal, comme décrit dans le document EP-A-1 942 033.

Les constructeurs de véhicules automobiles souhaitent doter leurs véhicules automobiles de dispositifs de pare-chocs avant ou arrière susceptibles de répondre de façon convenable aux différents types de chocs (choc « piéton » aux alentours de 40 km/h, chocs « parking » aux alentours de 15 km/h (ECE42), choc « réparabilité » aux alentours de 15 km/h (Danner), choc « compatibilité basse vitesse » aux alentours de 10 km/h (RCAR) et choc « haute vitesse » aux alentours de 64 km/h) tout en réduisant les coûts de fabrication.

Un but de l'invention est de proposer un dispositif de pare-chocs permettant une absorption de choc satisfaisante et pouvant être obtenu à faible coût et à masse réduite.

A cet effet, l'invention propose un dispositif de pare-chocs de véhicule automobile, du type précité, caractérisé en ce que chaque support possède une forme en « C » définie par une âme et deux branches s'étendant à partir de l'âme et délimitant entre elles, et avec l'âme, un logement de réception d'une portion d'extrémité d'un longeron.

Un tel dispositif permet d'élargir la plage verticale d'absorption sans nécessiter de structure de voie basse (prolonges de berceau, etc.) lourde et onéreuse.

Selon d'autres modes de réalisation, le dispositif de pare-chocs comprend une ou plusieurs des caractéristiques suivantes, prise(s) isolément ou selon toutes les combinaisons techniquement possibles :
- chaque support s'évase de l'extrémité libre de ses branches vers l'âme ;
- chaque support comprend au moins une face latérale évidée et munie de nervures de renfort convergeant vers le logement défini entre les branches ;
- le dispositif comprend au moins un insert d'absorption d'énergie disposé dans une cavité ménagée dans l'âme de chaque support ;
- chaque support est monobloc ;
- au moins un élément transversal est sous la forme d'une traverse de pare-chocs ;
- le dispositif comprend au moins deux traverses de pare-chocs espacées verticalement et supportées par les supports ;
- le dispositif comprend au moins une traverse de pare-chocs supportée par les supports en étant décalée longitudinalement par rapport à une autre traverse de pare-chocs supportée par les supports ;
- le dispositif comprend une traverse supérieure de face avant et/ou une traverse inférieure de face avant destinée(s) à supporter un groupe motoventialteur et/ou un radiateur d'un système de refroidissement d'un véhicule automobile, la traverse supérieure de face avant et/ou la traverse inférieure de face étant fixées supportées par les supports.

L'invention concerne également un véhicule automobile comprenant une caisse possédant deux longerons espacés transversalement et au moins un dispositif de pare-chocs tel que décrit ci-dessus, disposé aux extrémités des longerons.

L'invention et ses avantages seront mieux compris à la lecture de la description qui va suivre, donnée uniquement à titre d'exemple, et faite en se référant aux dessins annexés, sur lesquels :
- les Figures 1 et 2 sont des vues schématiques en perspective, respectivement assemblée et éclatée, d'un dispositif de pare-chocs conforme à l'invention ;
- la Figure 3 est une vue de côté du dispositif de pare-chocs de la figure 1 ;
- les Figures 4 à 6 sont des vues analogues à celle de la figure 3, illustrant d'autres modes de réalisation de dispositifs de pare-chocs.

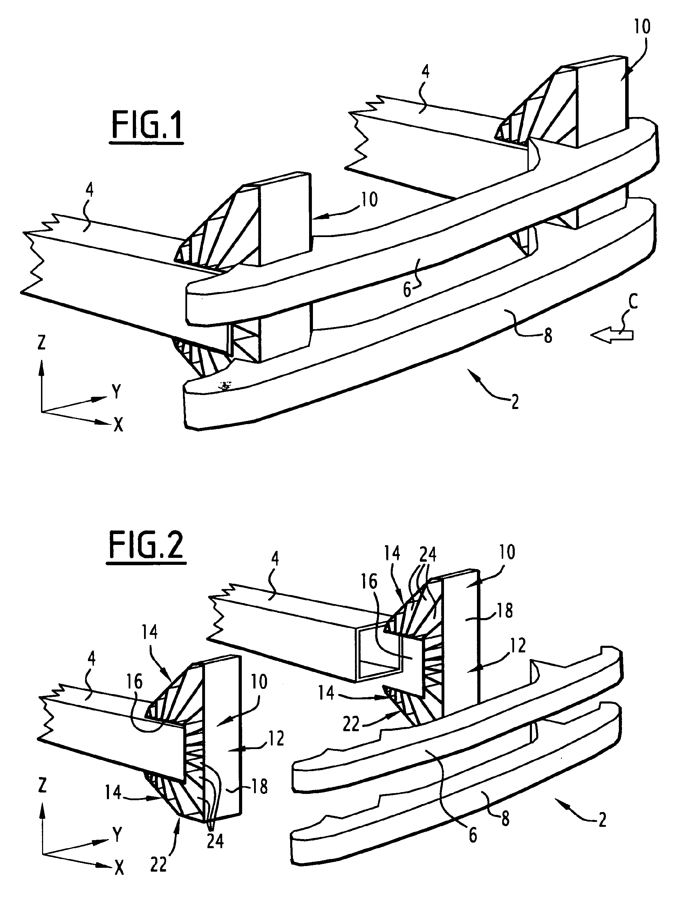

Le dispositif de pare-chocs 2 des Figures 1 et 2 est disposé aux extrémités avant de deux longerons 4 avant de la caisse d'un véhicule automobile.

Dans la suite de la description, les termes « longitudinal », « transversal » « horizontal », « vertical », « avant », « arrière », « inférieure », « supérieur », « haut », « bas » et « latéral » s'entendent par rapport au repère orthogonal usuel des véhicules automobiles, représenté sur les figures 1 et 2, et comprenant :
- un axe longitudinal X, horizontal et dirigé de l'arrière vers l'avant,
- un axe transversal Y, horizontal et dirigé de la droite vers la gauche, et
- un axe vertical Z, dirigé du bas vers le haut.

Les longerons 4 s'étendent longitudinalement vers l'avant, par exemple à partir d'un tablier (non représenté) de séparation d'un habitacle et d'un compartiment moteur, et sont espacés transversalement l'un de l'autre. Les longerons 4 s'étendent de part et d'autre d'un compartiment moteur.

Le dispositif de pare-chocs 2 comprend deux traverses de pare-chocs 6, 8 distinctes et séparées, s'étendant transversalement entre les extrémités avant des longerons 4 en étant espacées verticalement l'une de l'autre, et deux supports 10 de fixation des traverses de pare-chocs 6, 8 aux extrémités avant des longerons 4. Les supports 10 sont distincts et séparés des traverses de pare-chocs 6, 8 et des longerons 4.

Les traverses de pare-chocs 6, 8 comprennent une traverse de pare-chocs 6 supérieure (ou « voie haute ») prévue pour recevoir les impacts en partie haute du dispositif de pare-chocs 2, et une traverse de pare-chocs 8 inférieure (ou « voie basse ») prévue pour recevoir les impacts en partie basse du dispositif de pare-chocs 2.

Chaque support 10 est intercalé longitudinalement entre l'extrémité du longeron 4 correspondant et les traverses de pare-chocs 6, 8. Chaque support 10 est fixé à l'extrémité d'un longeron 4 respectif, et chacune des traverses de pare-chocs 6, 8 est fixées sur le support 10.

Selon une variante de réalisation de l'invention, la ou les traverses métalliques peuvent être surmoulées sur ou dans les supports 10, le moule assurant alors la bonne mise en position relative des supports situés à chaque extrémité.

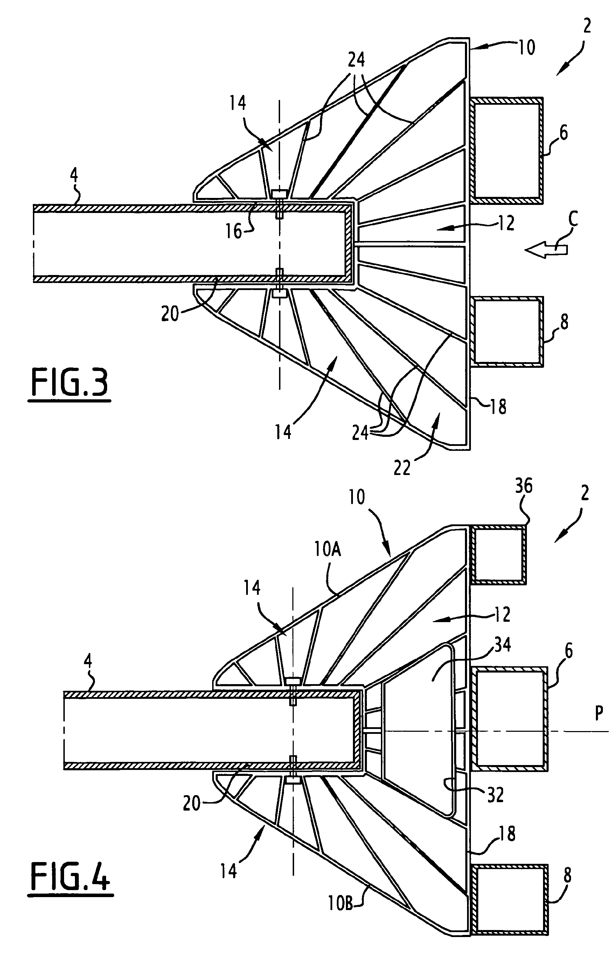

Tel que représenté sur les Figures 2 et 3, chaque support 10 présente une forme générale en « C » définie par une âme 12 et deux branches 14 s'étendant à partir de l'âme 12 et délimitant entre elles, et avec l'âme 12, un logement 16. L'âme 12 forme le fond du logement 16.

Comme cela est visible sur la figure 3, lorsque un support 10 est fixé sur un longeron 4, l'âme 12 s'étend verticalement et les branches 14 s'étendent longitudinalement de part et d'autre du longeron 4.

Chaque branche 14 présente une forme effilée s'amincissant de l'âme 12 vers l'extrémité libre de la branche 14. Le support 10 s'élargit verticalement depuis les extrémités libres des branches 14 vers l'âme 12. L'âme 12 de chaque support 10 est plus étendue verticalement que le longeron 4 correspondant.

L'âme comprend une face frontale 18 de l'âme 12 de réception des traverses de pare-chocs 6, 8 tournée du côté opposé aux branches 14. Dans l'exemple illustré, la face frontale 18 est plane et s'étend dans un plan sensiblement vertical et transversal. La face frontale 18 sert de surface d'appui longitudinal pour les traverses de pare-chocs 6, 8. Les traverses de pare-chocs 6, 8 sont fixées sur l'âme 12, par exemple par vissage.

Le logement 16 est prévu pour recevoir une portion d'extrémité 20 du longeron 4, qui est ainsi enserrée entre les branches 14. Le support 10 est rapporté et fixé sur longeron 4, par exemple par vissage des branches 14 et/ou de l'âme 12 sur le longeron 4.

La face frontale 18 est plus étendue verticalement que le logement 16 dont la section correspond à la section d'extrémité du longeron 4.

Chaque face latérale 22 de chaque support 10 est évidée et nervurée, et munie de nervures 24 de renfort convergeant de la périphérie de la face latérale 22 en direction du logement 16. Les nervures 24 comprennent en particulier des nervures 24 s'étendant dans l'âme entre la face frontale 18 et le logement 16.

Chaque support 10 a pour fonction d'assurer la fixation des traverses 6, 8 sur un des longeron 4, des transmettre au moins en partie les efforts résultants d'un choc longitudinal dirigé vers l'arrière (comme représentée par le flèche C sur la Figure 3) subi par les traverses de pare-chocs 6, 8 vers le longerons 4, et d'absorber au moins en partie l'énergie d'un choc longitudinal subi par les traverses de pare-chocs 6, 8 en s'écrasant longitudinalement selon l'intensité du choc.

La forme en C de chaque support 10, enserrant le longeron 4 et convergeant de l'âme 12 vers les extrémité des branches 14, permet de transmettre efficacement les efforts résultants d'impacts reçus à différentes hauteurs par l'âme 12 plus étendue verticalement que le longeron 4, et de les faire converger vers le longeron 4.

Les nervures 24 convergeant vers le logement 16 améliorent encore la transmission des efforts. Les nervures 24 s'étendant entre la face frontale 18 et le logement 16 s'arc-boutent en s'opposant à l'écrasement longitudinale de l'âme 12.

L'étendue verticale de la face frontale 18 permet de disposer plusieurs traverses de pare-chocs 6, 8 aux hauteurs souhaitées afin de satisfaire le mieux possible aux critères d'absorption de chocs.

Les supports 10 évitent d'avoir à prévoir des longerons additionnels (ou « brancard ») afin de pouvoir disposer plusieurs traverses de pare-chocs, ce qui limite le poids de la caisse du véhicule automobile et son coût de fabrication.

Les chocs à prendre en compte sont notamment le chocs « réparabilité » à une vitesse de 16 Km/h contre un obstacle s'étendant transversalement sur une partie de la largeur du véhicule, un choc « frontal » à une vitesse de 64 Km/h contre un obstacle s'étendant transversalement sur une partie de la largeur du véhicule, et un choc « piéton » simulant un choc contre une jambe à une vitesse d'environ 40 Km/h.

Les supports 10 sont prévus de préférence pour absorber au moins en partie l'énergie en se déformant lors des chocs « réparabilité » sans transmettre d'effort de flexion/cisaillement excessif aux longerons 4 afin de préserver ces dernier et d'éviter des réparations trop importantes. Ainsi la réparation du véhicule automobile pourra se faire par le simple remplacement des supports 10 et des traverses de pare-chocs 6, 8.

Chaque support 10 est réalisé par exemple en matériau plastique, par exemple en polymère thermoplastique (Polypropylène PP, Polycarbonate/Polybutylène téréphtalate PC/PBT, Polyamide PA, etc.), par exemple par moulage par injection. Ceux-ci peuvent être ou non chargés en fibres (verre, carbone, fibres naturelles) ou en charge minérale (par exemple du talc).

En alternative, chaque support 10 est réalisé en métal, par exemple en aluminium, en magnésium ou en acier, par un procédé tel que l'injection, le moulage ou le thixoformage.

Tel que représenté sur la Figure 3, le support 10 est monobloc. En variante, le support est réalisé en plusieurs parties assemblées entre elles.

Les supports 10 peuvent servir pour différents véhicules dont les longerons sont situés à différentes hauteurs. Les supports 10 dont les faces frontales 18 sont étendues verticalement vers le haut et le bas permettent d'adapter la hauteur des traverses de pare-chocs 6, 8.

Les supports 10 permettent de disposer une ou plusieurs traverses de pare-chocs suivant les types de véhicule, certains véhicule ne nécessitant qu'une traverse de pare-chocs ou plus de deux traverse de pare-chocs superposées, par exemple trois.

Avantageusement, les supports 10 peuvent également supporter directement un groupe moto ventilateur et/ou un ou plusieurs radiateurs d'un système de refroidissement d'un moteur du véhicule automobile, et / ou une traverse supérieure et/ou d'une traverse inférieure d'une face avant, destinée(s) à supporter directement un groupe moto ventilateur et/ou un ou plusieurs radiateurs de la face avant. Une telle face avant est disposée entre les longerons 4 avant en arrière des traverses de pare-chocs 6, 8 afin de protéger la face avant en cas de choc léger.

Un support 10 évidé et nervuré présente un poids faible tout en possédant une résistance satisfaisante et facilement maîtrisable. L'agencement des nervures 24 permet d'optimiser le rapport entre le poids et la résistance du support 10.

Afin d'augmenter les capacités d'absorption d'énergie d'un support 10, il est possible d'intégrer dans un support 10 un élément d'absorption d'énergie.

Tel que représenté sur la figure 4, un support 10 comprend une cavité 32 ménagées dans l'âme 12 dans le prolongement longitudinal du logement 16, et un bloc 34 d'absorption d'énergie, tel qu'un bloc de mousse et/ou de matériau en nid d'abeille, en matériau polymère ou métallique (par exemple mousse ou nid d'abeille aluminium), rapporté dans cette cavité 32.

Le bloc 34 permet d'absorber de l'énergie en cas d'écrasement longitudinale de l'âme 12.

Pour permettre le montage du bloc 34, il est possible de fabriquer le support 10 en deux parties 10A, 10B, séparées par un plan de joint P horizontal et sensiblement symétriques par rapport à ce plan, et d'insérer le bloc 34 entre ces deux parties 10A, 10B.

Tel qu'illustré sur la figure 4, les traverses de pare-chocs 6, 8 sont décalées vers le bas et le dispositif 2 comprend une traverse de pare-chocs 36 additionnelle fixée à l'extrémité supérieure de la face frontale 18.

Il est possible de fixer une traverse de pare-chocs décalée longitudinalement par rapport aux autres traverses de pare-chocs.

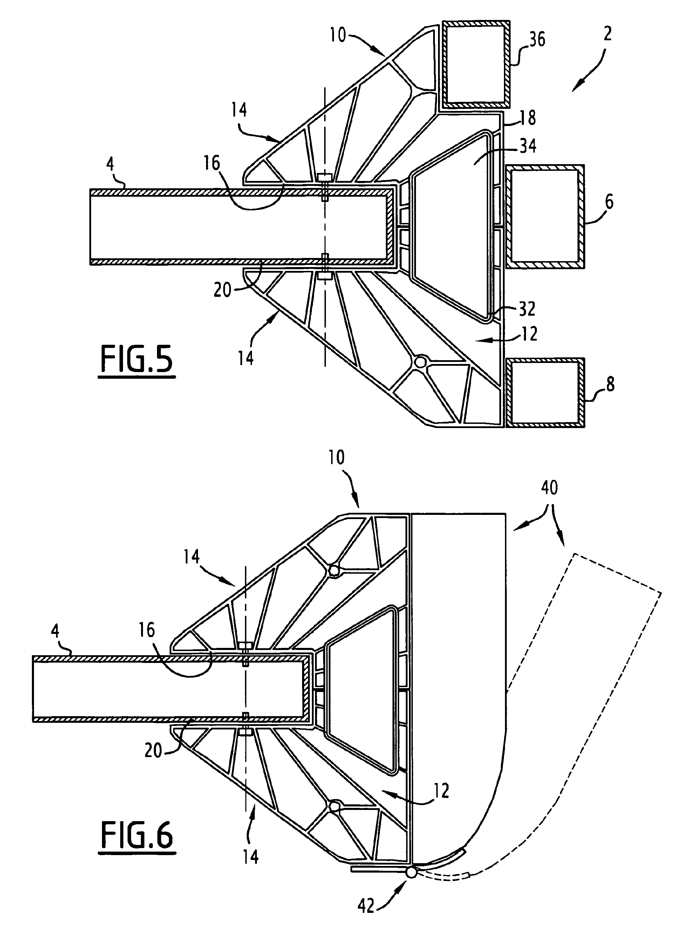

Tel qu'illustré sur la figure 5, un décrochement est ménagé à l'extrémité supérieure de face frontale 18 de façon à décaler la traverse de pare-chocs 36 additionnelle vers l'arrière par rapport aux deux traverses de pare-chocs 6, 8.

L'invention s'applique aux dispositifs de pare-chocs avant comme aux dispositifs de pare-chocs arrière.

Tel que représenté sur la figure 6, un dispositif de pare-chocs 2 arrière est fixé aux extrémités arrière de longerons 38 arrière de la caisse d'un véhicule automobile.

Ce dispositif de pare-chocs 2 sert avantageusement de support pour un ouvrant 40, telle qu'une ridelle de fermeture d'un coffre, s'étendant transversalement entre les longerons 38. L'ouvrant 40 est fixée par des charnières 42 d'axe transversal aux extrémités inférieures des supports 10 de façon à pouvoir rabattre l'ouvrant 40 vers l'arrière et vers le bas pour accéder à un coffre (position illustrée en pointillés). L'ouvrant 40 peut intégrer une ou plusieurs traverses de pare-chocs ou être remplacer par des traverses de pare-chocs arrière.

## Revendications

1. Dispositif de pare-chocs (2) pour véhicule automobile, du type comprenant au moins un élément transversal (6, 8, 36, 40) prévu pour s'étendre transversalement entre les extrémités de deux longerons (4) de véhicule automobile, et deux supports (10) pour fixer le ou chaque élément transversal (6, 8) sur les longerons (4), chaque support (10) comprenant une face frontale (18) de réception du ou de chaque élément transversal (6, 8, 36, 40),
**caractérisé en ce que** chaque support (10) possède une forme en « C » définie par une âme (12) et deux branches (14) s'étendant à partir de l'âme (12) et délimitant entre elles, et avec l'âme (12), un logement (16) de réception d'une portion d'extrémité (20) d'un longeron (4).

2. Dispositif de pare-chocs selon la revendication 1, dans lequel chaque support (10) s'évase de l'extrémité libre de ses branches (14) vers l'âme (12).

3. Dispositif de pare-chocs selon la revendication 1 ou 2, dans lequel chaque support (10) comprend au moins une face latérale (22) évidée et munie de nervures de renfort (24) convergeant vers le logement (16) défini entre les branches (14).

4. Dispositif de pare-chocs selon l'une quelconque des revendications précédentes, comprenant au moins un insert (34) d'absorption d'énergie disposé dans une cavité (32) ménagée dans l'âme (12) de chaque support (10).

5. Dispositif de pare-chocs selon l'une quelconque des revendications précédentes, dans lequel chaque support (20) est monobloc.

6. Dispositif de pare-chocs selon l'une quelconque des revendications précédentes, dans lequel au moins un élément transversal est sous la forme d'une traverse de pare-chocs (6, 8).

7. Dispositif de pare-chocs selon la revendication 6, comprenant au moins deux traverses de pare-chocs (6, 8) espacées verticalement et supportées par les supports (10).

8. Dispositif de pare-chocs selon la revendication 7, comprenant au moins une traverse de pare-chocs supportée par les supports (10) en étant décalée longitudinalement par rapport à une autre traverse de pare-chocs supportée par les supports (10).

9. Dispositif de pare-chocs selon l'une quelconque des revendications précédentes, comprenant une traverse supérieure de face avant et/ou une traverse inférieure de face avant destinée(s) à supporter un groupe motoventialteur et/ou un radiateur d'un système de refroidissement d'un véhicule automobile, la traverse supérieure de face avant et/ou la traverse inférieure de face étant fixées supportées par les supports.

10. Véhicule automobile comprenant une caisse possédant deux longerons (4) espacés transversalement et au moins un dispositif de pare-chocs (2) selon l'une quelconque des revendications précédentes, disposé aux extrémités des longerons (4).

## Claims

1. Bumper assembly (2) for motor vehicles of the type comprising at least one transverse element (6, 8, 36, 40) intended to extend transversely between the ends of two side bars (4) of the motor vehicle, and two supports (10) to secure the or each transverse element (6, 8) on the side bars (4), wherein each support (10) comprises a front face (18) to receive the or each transverse element (6, 8, 36, 40),
**characterised in that** each support (10) has a C-shaped form defined by a core (12) and two arms (14) extending from the core (12) and delimiting between them and with the core (12) a seating (16) to receive an end section (20) of a side bar (4).

2. Bumper assembly according to claim 1, in which each support (10) widens from the free end of its arms (14) towards the core (12).

3. Bumper assembly according to claim 1 or 2, in which each support (10) comprises at least one hollowed out side face (22) fitted with reinforcing ribs (24), which converge towards the seating (16) defined between the arms (14).

4. Bumper assembly according to any one of the preceding claims, comprising at least one energy absorption insert (34) arranged in a cavity (32) provided in the core (12) of each support (10).

5. Bumper assembly according to any one of the preceding claims, in which each support (20) is cast in a single piece.

6. Bumper assembly according to any one of the preceding claims, in which at least one transverse element is in the form of a bumper cross bar (6, 8).

7. Bumper assembly according to claim 6, comprising at least two bumper cross bars (6, 8) spaced vertically and supported by the supports (10).

8. Bumper assembly according to claim 7, comprising at least one bumper cross bar supported by the supports (10) being shifted longitudinally in relation to another bumper cross bar supported by the supports (10).

9. Bumper assembly according to any one of the preceding claims, comprising an upper front face cross bar and/or a lower front face cross bar intended to support a motor ventilator assembly and/or a radiator of a cooling system for a motor vehicle, wherein the upper front face cross bar and/or the lower front face cross bar are secured and supported by the supports.

10. Motor vehicle comprising a body having two transversely spaced side bars (4) and at least one bumper assembly (2) according to any one of the preceding claims arranged at the ends of the side bars (4).

## Patentansprüche

1. Stoßstangenvorrichtung (2) für ein Kraftfahrzeug, des Typs, der aufweist: mindestens ein Quer-Element (6, 8, 36, 40), das vorgesehen ist, um sich zwischen den Enden von zwei Kraftfahrzeug-Längsträgern (4) in Querrichtung zu erstrecken, und zwei Stützen (10), um das oder jedes Quer-Element (6, 8) an den Längsträgern (4) zu befestigen, wobei jede Stütze (10) eine Stirnseite (18) zum Aufnehmen des oder jedes Quer-Elements (6, 8, 36, 40) aufweist,
**dadurch gekennzeichnet, dass** jede Stütze (10) eine "C"-Form aufweist, die durch einen Steg (12) und zwei Schenkel (14) definiert ist, die sich von dem Steg (12) aus erstrecken und zwischen einander und mit dem Steg (12) eine Aufnahme (16) zum Aufnehmen eines Endabschnitts (20) eines Längsträgers (4) begrenzen.

2. Stoßstangenvorrichtung gemäß Anspruch 1, wobei jede Stütze (10) sich von dem freien Ende ihrer Schenkel (14) in Richtung zu dem Steg (12) hin erweitert.

3. Stoßstangenvorrichtung gemäß Anspruch 1 oder 2, wobei jede Stütze (10) mindestens eine Seitenfläche (22) aufweist, die hohl und mit Verstärkungsrippen (24) versehen ist, die in Richtung zu der zwischen den Armen (14) definierten Aufnahme (16) zusammenlaufen.

4. Stoßstangenvorrichtung gemäß einem der vorhergehenden Ansprüche, aufweisend mindestens ein Einsatzstück (34) zum Aufnehmen von Energie, das in einem Hohlraum (32) angeordnet ist, der in dem Steg (12) von jeder Stütze (10) vorgesehen ist.

5. Stoßstangenvorrichtung gemäß einem der vorhergehenden Ansprüche, wobei jede Stütze (20) aus einem Stück ist.

6. Stoßstangenvorrichtung gemäß einem der vorhergehenden Ansprüche, wobei mindestens ein Quer-Element in Form einer Stoßstangen-Querstrebe (6, 8) vorgesehen ist.

7. Stoßstangenvorrichtung gemäß Anspruch 6, aufweisend mindestens zwei Stoßstangen-Querstreben (6, 8), die in vertikalem Abstand voneinander angeordnet und durch die Stützen (10) abgestützt sind.

8. Stoßstangenvorrichtung gemäß Anspruch 7, aufweisend mindestens eine Stoßstangen-Querstrebe, die durch die Stützen (10) abgestützt ist, wobei sie gegen eine andere durch die Stützen (10) abgestützte Stoßstangen-Querstrebe in Längsrichtung versetzt ist.

9. Stoßstangenvorrichtung gemäß einem der vorhergehenden Ansprüche, aufweisend eine obere Stirnseiten-Querstrebe und/oder eine untere Stirnseiten-Querstrebe, die dazu bestimmt ist/sind, eine Lüftersatzgruppe und/oder einen Kühler eines Kühlsystems eines Kraftfahrzeugs abzustützen, wobei die obere Stirnseiten-Querstrebe und/oder die untere Stirnseiten-Querstrebe durch die Stützen abgestützt befestigt sind.

10. Kraftfahrzeug, aufweisend eine Karosserie, die zwei in Querrichtung im Abstand voneinander angeordnete Längsträger (4) und mindestens eine Stoßstangenvorrichtung (2) gemäß einem der vorhergehenden Ansprüche aufweist, die an den Enden der Längsträger (4) angeordnet ist.
